Europäisches Patentamt

European Patent Office

Office européen des brevets

(19)

(11) **EP 1 318 476 A1**

(12) ## DEMANDE DE BREVET EUROPEEN

(43) Date de publication:
**11.06.2003 Bulletin 2003/24**

(51) Int Cl.$^7$: **G06T 7/00**, G06T 5/50

(21) Numéro de dépôt: **02292852.7**

(22) Date de dépôt: **15.11.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **19.11.2001 FR 0114934**

(71) Demandeur: **Astrium SAS**
**78140 Velizy-Villacoublay (FR)**

(72) Inventeurs:
• **Boulogne, Laurent**
**31570 Ste Foy D'Aigrefeuille (FR)**
• **Gautret, Laurent**
**31520 Ramonville St Agne (FR)**

(74) Mandataire: **Fort, Jacques**
**CABINET PLASSERAUD**
**84, rue d'Amsterdam**
**75440 Paris Cedex 09 (FR)**

(54) **Procédé et dispositif de traitement spatio-temporel anti-repliement d'images d'une même série**

(57) Le procédé de traitement spatio-temporel d'images successives d'une scène comportant un fond structuré permet d'obtenir une succession d'images ou vignettes filtrées. Il comporte, éventuellement après une extraction dans les images de vignettes de dimensions inférieures à celles de l'image, recalées pour être cadrées de façon sensiblement identique sur une zone d'intérêt prédéterminé, les étapes suivantes: on mémorise de façon glissante des séquences comprenant chacune une image ou vignette de référence d'ordre i et un même nombre (N) d'images ou de vignettes encadrant temporellement l'image ou vignette de référence; on effectue sur chaque séquence un traitement de registration anti-repliement de restitution des décalages inter-images, par estimation de fond, filtrage anti-repliement et estimation du décalage de l'image ou vignette de référence; et on effectue, sur les images ou vignettes registrées, une opération de suppression de fond anti-repliement par nouvelle estimation du fond et soustraction.

FIG.1.

## Description

La présente invention concerne le traitement d'images successives d'une scène comportant un fond structuré sensiblement stationnaire (mais pouvant présenter un mouvement propre), en vue de pouvoir détecter une cible non résolue, mobile ou instationnaire.

On connaît déjà divers procédés et dispositifs remplissant cette fonction. Ils se prêtent mal à la détection dans un environnement défavorable, en particulier lorsque la cible présente un faible contraste, lorsque le rapport signal à bruit est faible, lorsque la ligne de visée de l'appareil fournissant les images manque de stabilité et/ou lorsque le fond présente un mouvement propre.

Le contraste entre la cible et le fond peut être amélioré en réduisant le pas p de répartition des pixels de l'image, mais on arrive à des volumes et débits d'information excessifs.

On peut réduire le diamètre de pupille de l'instrument optoélectronique de formation d'image. Mais on augmente le bruit et corrélativement on réduit le rapport S/B.

Souvent ces contraintes obligent à adopter un pas et un diamètre de pupille D tels qu'on ne respecte pas la condition de Shannon fe/fc ≥ 2, où fe = 1/p et fc = D/λ (λ étant la longueur d'onde d'observation). Le non-respect de cette condition de Shannon provoque des repliements de spectre lors des interpolations des modes de traitement classiques.

La présente invention vise notamment à fournir un procédé et un dispositif permettant d'écarter dans une large mesure les difficultés provoquées par les mouvements apparents du fond et les repliements de spectre dans les cas où les conditions de Shannon ne sont pas remplies.

Dans ce but, l'invention propose notamment un procédé de traitement spatio-temporel d'images successives d'une scène comportant un fond structuré, suivant lequel, éventuellement après une extraction dans les images de vignettes de dimensions inférieures à celles de l'image, recalées pour être cadrées de façon sensiblement identique sur une zone d'intérêt prédéterminé,

- on mémorise de façon glissante des séquences comprenant chacune une image ou vignette de référence d'ordre i et un même nombre d'images ou de vignettes encadrant temporellement l'image ou vignette de référence.
- on effectue sur chaque séquence un traitement de registration anti-repliement de restitution des décalages inter-images, par estimation de fond, filtrage anti-repliement et estimation du décalage de l'image ou vignette de référence, et
- on effectue, sur les images ou vignettes registrées, une opération de suppression de fond anti-repliement par nouvelle estimation du fond et soustraction, de façon à fournir une succession d'images ou vignettes filtrées.

Suivant que l'on se trouve plus ou moins loin de la condition de Shannon, certaines opérations peuvent être prévues ou non et d'autres, telles que l'estimation du fond, peuvent être plus ou moins complexes. Parmi les modes de réalisation, un intérêt particulier s'attache au mode dit haute résolution qui sera particulièrement décrit.

L'invention propose également un dispositif de mise en oeuvre du procédé ci-dessus, comprenant un instrument optoélectronique qui peut être de type classique, fournissant des images numériques

Les caractéristiques ci-dessus ainsi que d'autres apparaîtront mieux à la lecture de la description qui suit de modes particuliers de réalisation donnés à titre d'exemples non limitatifs. La description se réfère aux dessins qui l'accompagnent, dans lesquels :

- la figure 1 est un synoptique simplifié de la chaîne de traitement d'images dans son ensemble ;
- la figure 2 est un synoptique de l'extraction de vignette, qui constitue une étape optionnelle ;
- la figure 3 est un synoptique du traitement spatio-temporel anti-repliement;
- la figure 4 définit l'horizon de visibilité ;
- la figure 5 est un synoptique des opérations de registration et de la suppression qui interviennent dans le synoptique de la figure 3 ;
- la figure 6 est un synoptique des opérations de registration et de la suppression qui interviennent dans le cas de la basse résolution ou BR ;
- la figure 7 est un synoptique de post traitement BR; basse résolution ;
- la figure 8 montre les opérations correspondant à celles de la figure 6 dans le cas de la version à passage dans le domaine fréquentiel ;
- la figure 9 est un synoptique simplifié du mode STAR-moyenne résolution ;
- la figure 10 est un synoptique simplifié du mode STAR-haute résolution ;
- la figure 11 est un synoptique simplifié du processus ERMI;
- la figure 12 est un schéma d'image de référence destiné à faire apparaître le choix d'un support dans la fusion de deux images; et

- la figure 13 est un schéma destiné à montrer les vecteurs de déplacement en cas de fusion de deux images.

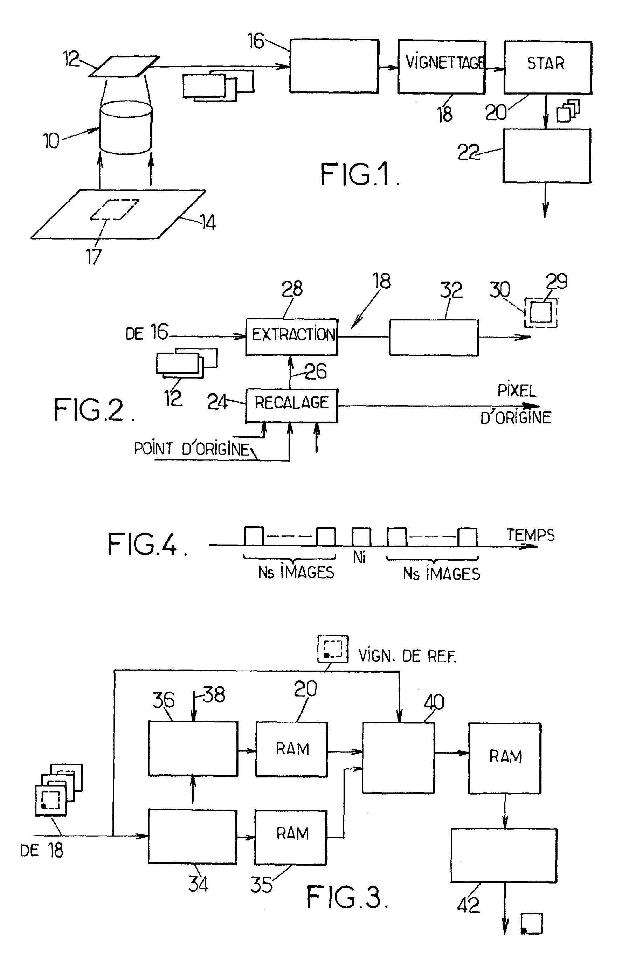

L'architecture générale d'une chaîne de traitement complète est indiquée en figure 1. Un instrument optoélectronique 10 fournit des images "brutes" successives 12 en 2D d'une scène 14, sous forme d'une matrice de pixels codés chacun sur N bits.

L'image peut notamment être obtenue à l'aide d'un détecteur matriciel ou à barrette.

La partie traitement de la chaîne représentée en figure 1 peut être regardée comme comportant successivement :

- un module 16 de correction radiométrique, fournissant des images corrigées, qui sera quelquefois omis,
- un module de vignettage 18, permettant d'extraire des vignettes contenant la représentation de la zone d'intérêt 17,
- un module de traitement spatio-temporel 20 qui est un élément essentiel de l'invention.

Les vignettes filtrées successives fournies par le module 20 sont ensuite utilisables par la détection de cible qui peut être effectuée par des moyens classiques 22. Les modules sont pilotés par un organe de gestion non représenté, pouvant être associé à des capteurs d'orientation de la ligne de visée de l'instrument 10. Cet organe fournit également l'information de date. La localisation de chaque pixel dans un référentiel lié à l'instrument est assurée par des données accompagnant les images brutes.

Des constitutions possibles de ces différents modules seront maintenant décrits.

Module de correction radiométrigue

Le module 16 ne sera prévu que dans certains cas et notamment lorsque les caractéristiques de l'instrument l'exigent. Il a pour rôle de compenser les écarts de réponse des sites de détection de capteur de l'instrument 10. Souvent il applique au signal de sortie de chaque site de simples corrections de biais (ou "offset") et de gain, par une loi polynomiale.

Module de vignettage

Le module 18, qui sera également omis dans certains cas, a pour fonction de sélectionner une fraction de chaque image d'origine, dite "vignette" qui cadre au mieux avec une zone d'intérêt définie dans un référentiel lié à la scène observée d'effectuer une pondération réduisant les effets de bord. Le vignettage peut être réalisé par des circuits spécifiques disponibles dans le commerce sous forme d'ASIC ou par un traitement informatique de type réalisable par des programmes actuellement disponibles.

Dans le cas schématisé sur la figure 2, le module 18 effectue plusieurs opérations successives, dont certaines peuvent être omises.

Une première opération 24 consiste à déterminer des paramètres permettant de recaler les vignettes avec la zone d'intérêt dans la scène. Elle utilise pour cela des informations externes sur un point d'origine de la vignette à extraire (par exemple un coin) dans la scène, la position et l'attitude de l'instrument et des données de datation et de localisation des pixels. Cette étape fournit en 26 l'adresse d'un pixel d'origine dans l'image en cours.

La seconde opération est l'extraction 28 d'une vignette utile rectangulaire 29 et d'une bordure 30 qui permettra de réduire les effets de bord. Si la vignette utile a une taille de Mu x Nu pixels, la vignette complète extraite aura une tailler de (Mu + 2.Mb)(Nu + 2Nb) pixels. Mb et Nb sont généralement inférieurs à 10 pour des tailles de vignette utile jusqu'à 100 x 100 pixels.

La troisième étape illustrée est une pondération 32, qui peut être de type classique (par fenêtre de Hanning par exemple) destinée à réduire les effets de bord.

On dispose ainsi, en sortie du module 18,d'une succession de vignettes extraites recalées mutuellement, avec indication de leur pixel d'origine.

Module de traitement spatio-temporel (figure 3)

Le module 20 peut présenter des constitutions très diverses.

Mais, dans tous les cas, il réalise simultanément deux fonctions :

- désensibilisation aux effets des repliements de spectre imposés par l'instrument 10,
- désensibilisation aux effets des mouvements inter-images imposés par l'instabilité de la ligne de visée et les mouvements propres des fonds.

Les traitements spatio-temporels intègrent des opérations de registration et de suppression de fond anti-repliement.

Ces traitements peuvent fonctionner nominalement en mode "pipe-line", ce qui minimise la puissance de calcul nécessaire.

Les traitements exploitent une séquence d'images sur ce qu'on appellera un "horizon de visibilité". L'horizon de visibilité Nh (figure 4) de la séquence est constitué par Nh = [(Ns-) + 1 + (Ns+)] images, c'est-à-dire :

- les Ns- images avant l'image de référence d'ordre i,
- l'image de référence sur laquelle on cherche à supprimer le fond,
- les Ns+ images après l'image de référence.

La dernière image de cette séquence [-Ns-;1;Ns+] correspond avantageusement à la dernière image disponible afin de minimiser le retard de la chaîne de traitements par rapport aux images fournies par l'instrument.

La mémorisation nécessaire pour les calculs est interne aux traitements.

On peut regarder la chaîne de traitement (fig. 3) comme comportant :

- des pré-traitements 34 sur les vignettes complètes extraites, (provenant de l'opération 32), dont le résultat est stocké temporairement dans une mémoire de travail 35,
- une registration anti-repliement 36 des vignettes, utilisant une information 38 donnant les décalages possibles,
- une suppression de fond anti- repliement 40 sur la vignette de référence i à chaque séquence,
- des post-traitements 42 sur les vignettes de référence, fournissant les vignettes utiles filtrées successives.

Ces opérations peuvent s'effectuer, comme on le verra plus loin, soit en restant dans l'espace direct, soit en passant dans l'espace fréquentiel.

Les pré-traitements 34 préparent les vignettes extraites en vue des opérations effectuées lors de la registration et de la suppression du fond. Les post-traitements 42 travaillent les vignettes filtrées avant diffusion aux traitements situés en aval.

Les pré-traitements peuvent comporter des éventuelles transformations de Fourier, des extractions d'amplitude et de phase.

Les post-traitements peuvent comporter des éventuelles transformations inverses de Fourier ainsi que des traitements de pondération temporelle, de filtrage spatial et d'élimination de la bordure des vignettes filtrées

La registration anti-repliement 36 a pour objectif de restituer, malgré les repliements, les décalages inter-images.

La suppression de fond anti-repliement 40 a pour objectif de restituer puis de soustraire, malgré les repliements et les mouvements apparents, les fonds présents dans une vignette de référence en exploitant les vignettes registrées fournies par la registration anti-repliement 36.

Ces opérations seront successivement décrites.

La registration 36 estime les décalages inter-images en exploitant, après un filtrage anti-repliement, les informations du fond non polluées par le repliement et estimées sur un support fréquentiel éventuellement étendu par fusion de N1 images.

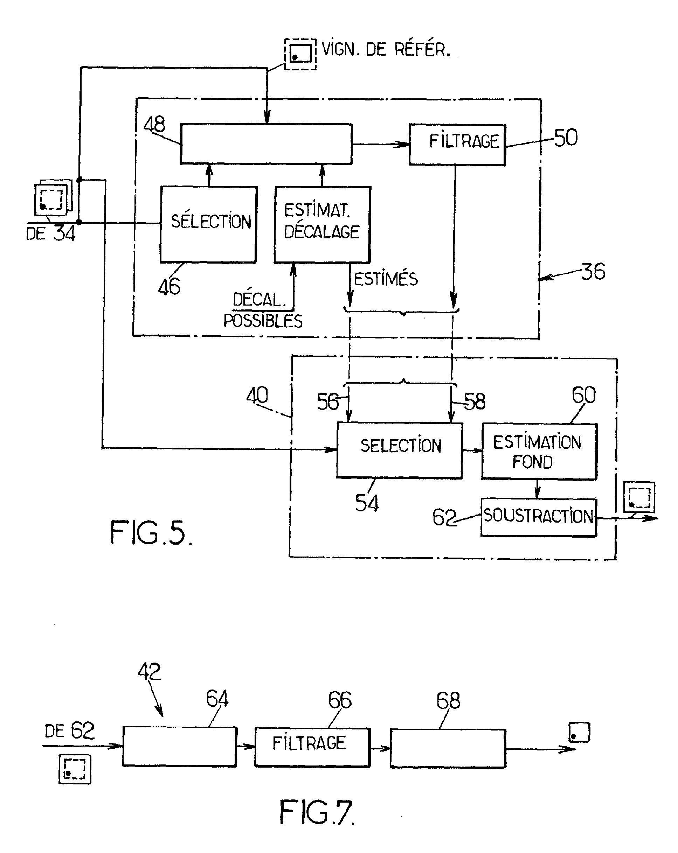

Les opérations de base de la registration anti-repliement 36 sont montrées en figure 5. Elles comportent :

- une étape 46 de sélection des images utilisées lors de l'estimation du fond,
- une étape 48 d'estimation du fond par fusion d'image(s) : cette estimation de fond peut aller de la simple interpolation d'une image (N1= 1) à plusieurs fusions de N1 images sur un support fréquentiel étendu, (voir rubrique FISE) ; mais on a toujours N1 ≤ Nh :

- une étape 50 de filtrage anti-repliement,
- une étape 52 d'estimation du décalage de la vignette de référence, pouvant aller du simple calcul du barycentre d'un maximum de corrélation à la recherche de la solution optimale, en passant par une estimation rapide dans l'espace fréquentiel, comme on le verra plus loin sous la rubrique ERMI.

La suppression de fond anti-repliement 40, également schématisée en figure 5, consiste à estimer puis à soustraire, dans chaque vignette de référence d'ordre i (extraite ou pré-traitée), le fond préalablement estimé dans un domaine spectral étendu (fusion d'un nombre N2 d'images supérieur à 1) et recalé grâce aux informations issues de la registration anti-repliement.

La suppression de fond anti-repliement 40 comprend, de façon générique :

- une sélection 54 parmi les vignettes prétraitées utilisant la sortie de la registration 36 (vignettes non repliées 56 et décalage estimé 58), une étape d'estimation du fond par fusion de N2 images, pouvant aller de la simple exploitation des vignettes registrées à la fusion de N2 images sur un support fréquentiel étendu (voir rubrique FISE) suivie par un ré-échantillonnage (avec la condition NI ≤ N2 ≤ Nh),
- une étape de soustraction du fond 62, fournissant une vignette de référence filtrée.

On décrira maintenant, à titre d'exemples, trois modes d'exécution du module de traitement spatio-temporel, anti-repliement, ou STAR, chaque fois avec une version travaillant dans l'espace direct et une version travaillant dans l'espace fréquentiel.

Un premier mode, dit à basse résolution (STAR-BR) est avantageux lorsque la fréquence d'échantillonnage est supérieure à la fréquence de coupure optique sans respecter toutefois la condition de Shannon, c'est-à-dire lorsque 1 < fe/fc < 2. Mais il est sous optimal.

Le mode moyenne résolution STAR-MR est optimal pour ce cas, mais plus complexe.

Le mode haute résolution STAR-HR a été conçu pour travailler principalement dans une gamme où la fréquence d'échantillonnage est inférieure à la fréquence de coupure optique, c'est-à-dire lorsque fe/fc < 1. Il est particulièrement représentatif de l'intérêt de l'invention.

Les modes STAR-BR, STAR-MR et STAR-HR se distinguent par les processus mis en oeuvre dans les modules de registration et de suppression de fond anti-repliement ainsi que dans les pré-traitements et post-traitements qui leur sont associés.

## Traitements d' images STAR-BR

### (a) Version STAR-BRn dans l'espace 2D naturel direct

Dans cette version, il n'y a pas de pré-traitement 34.

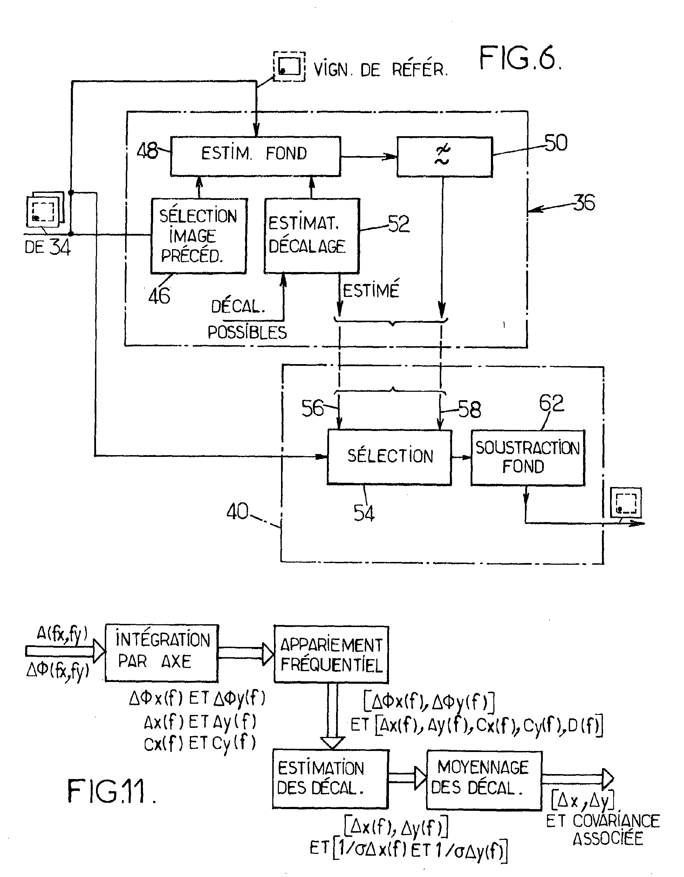

La registration anti-repliement 36 est simple, comme le montre la figure 6, où les éléments correspondant à ceux de la figure 5 portent la même référence. Elle comporte :

- une estimation du fond 48 par interpolation d'une seule image (N1 =1): cette interpolation des images est classique (bi-cubique, bi-linéaire ou autre). Si l'interpolation est subpixellique, les décalages supposés sont fournis implicitement ou explicitement par l'estimateur correspondant.
- un filtrage anti-repliement 50 qui est un simple passe-bas, dont la réponse impulsionnelle passe-bas est finie et est inférieure à [2*Mb ; 2*Nb] ; la fréquence de coupure étant adaptée à la fréquence de coupure optique fc.
- une estimation 52 du décalage de la vignette de référence d'ordre i, cette estimation peut être assurée par des processus classiques comme par exemple la recherche d'un maximum de corrélation entre la vignette non repliée du fond et la vignette non repliée de référence : la recherche est pixellique ou subpixellique, itérative ou systématique, et peut intégrer un barycentrage.

La suppression de fond anti-repliement 40 est également simplifiée : elle se limite à une estimation du fond par sélection parmi les vignettes registrées non repliées de l'étape précédente et à une soustraction directe 62 de la vignette registrée et non repliée représentant le fond à la vignette registrée et non repliée de référence.

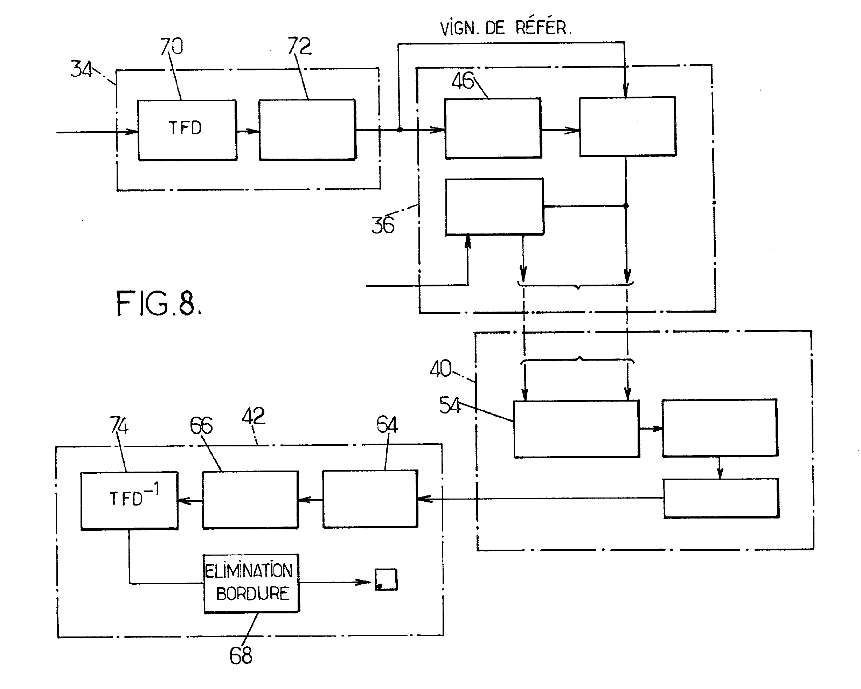

Les post-traitements (figure 7) peuvent comporter, éventuellement après une pondération temporelle 64 des vignettes filtrées (optionnelle), limitée à l'horizon de visibilité de la séquence d'images [-Ns-;Ns+] et après un filtrage spatial 66 des vignettes filtrées (également optionnel), une élimination 68 de la bordure des vignettes filtrées.

Si un filtrage spatial est prévu, sa réponse impulsionnelle est finie et est inférieure à [2.Mb ;2.Nb]. Elle est adaptée à la cible et à sa trajectoire apparente possible.

L'ensemble des paramètres correspondant aux différents étapes du traitement est fixé par l'organe de gestion externe.

### (b) Version STAR-BR dans l'espace 2D fréquentiel

Une version optimisée pour le temps réel et travaillant dans l'espace 2D fréquentiel de ce traitement est la suivante, dans le cas de vignettes carrées de dimension $2^{nv}*2^{nv}$ ; les synoptiques correspondants sont donnés en figure 8.

Les pré-traitements comportent une transformation de Fourier discrète 70 des vignettes et une extraction 72 de la phase et de l'amplitude des vignettes.

La registration anti-repliement 36 comprend encore plusieurs opérations :

- une estimation directe du fond (N1=1) 48 en exploitant directement l'amplitude et la phase des vignettes dans l'espace fréquentiel,
- un filtrage anti-repliement passe bas 50 à déphasage nul, pouvant être de type porte, dont la fréquence de coupure est adaptée à la fréquence de coupure optique,
- une estimation 52 du décalage de la vignette de référence par soustraction des phases et estimation rapide des mouvements inter-images, tel que celle détaillée plus loin sous la rubrique ERMI.

La suppression de fond anti-repliement 40 comporte les mêmes opérations 54, 60 et 62 que dans le cas de la figure 5.

Les post-traitements 42 reprennent les opérations de la version précédente mais il s'y ajoute une TFD$^{-1}$. Elle comporte

- une pondération temporelle 64 des vignettes filtrées,
- un filtrage spatial 66 et, après la TFD$^{-1}$ 74,
- une élimination 68 de la bordure de la vignette filtrée.

**Traitements d' images STAR-MR**

Dans ce mode, utilisé lorsque la fréquence d'échantillonnage fe est supérieure à la fréquence de coupure optique fc, les repliements de spectre imposés par l'instrument ne sont pas subis sur toutes les fréquences observées. On profite de cette particularité pour ré-utiliser les étapes de la version STAR-BR dans la restitution des décalages inter-images. En revanche on met en oeuvre un nouveau concept de suppression du fond.

(a) Version STAR-MRn dans l'espace 2D naturel direct

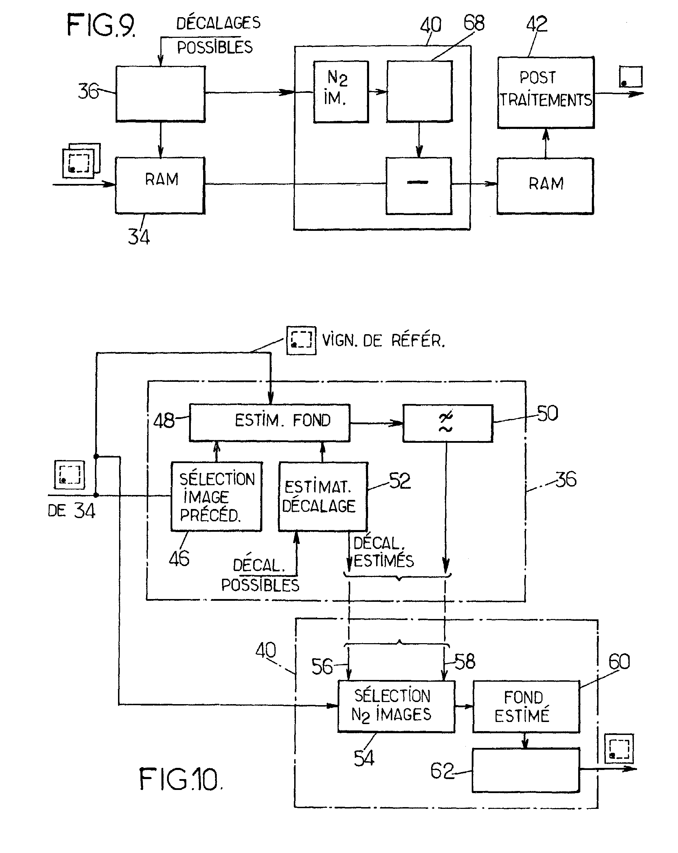

Le synoptique est donné en figure 9 qui ne répète pas le détail des opérations décrites au sujet de la version STAR-BR.

De nouveau, il n'y a pas de pré-traitement.

La registration anti-repliement 36 est la même que dans le mode précédent.

La suppression de fond anti-repliement 40 implique cette fois

- une estimation du fond 68 par fusion de N2 (N2 > 1) images dans l'espace naturel. Cette fusion des images peut être avantageusement une fusion de N2 images sur une support étendu; toutefois elle peut être une fusion approximative classique, par exemple de type convolution normalisée. On s'assure préalablement de l'inversibilité du problème du dépliage en choisissant des images formant des N-uplets non dégénérés (explicitement ou implicitement par redondance). Un exemple de processus de fusion d'images sur support étendu sera détaillé sous la rubrique FISE.
- une soustraction directe 62 du fond estimé ré-échantillonné à la vignette de référence extraite.

Les post-traitements 42 sont les mêmes que dans le cas du traitement STAR-BR et comprenant, après une pondération temporelle des vignettes filtrées qui est optionnelle et un filtrage spatial des vignettes filtrées qui est également optionnel, une élimination de la bordure des vignettes filtrées.

(b) Version STAR-MR dans l'espace 2D fréquentiel

De nouveau, on s'attachera au cas de vignettes carrées de dimension $2^{nv}*2^{nv}$.

Les pré-traitements et la registration anti-repliement sont les mêmes que dans le cas STAR-BR.

La suppression de fond anti-repliement comporte, comme dans la version dans le domaine naturel, une estimation du fond par fusion de N2 (N2 > 1) images, et un ré-échantillonage dans l'espace naturel suivi d'une soustraction directe du fond estimé ré-échantillonné à la vignette de référence extraite, comme dans le cas de traitement dans l'espace direct.

Les post-traitements sont également les mêmes que dans le cas de la version STAR-BR.

**Traitements d' images STAR-HR**

Ces traitements images constituent une solution optimale au problème lorsque fe < fc, mais ils sont plus complexes que les traitements STAR-BR et STAR-MR.

Lorsque la fréquence d'échantillonnage fe est inférieure à la fréquence de coupure fc, les fréquences observables sur une image peuvent dans leur ensemble être polluées par les repliements. L'étape de restitution des mouvements inter-images ne peut donc pas s'appuyer sur le processus rapide ERMI déjà mentionné et défini plus loin. Il est nécessaire de mettre en oeuvre des processus de fusion multi-images.

(a) Version STAR-HR dans l'espace 2D naturel direct (figure 10)

Aucun pré-traitement n'est nécessaire.
La registration anti-repliement 36 comprend :

- une estimation du fond 48 par fusion de N1 images dans l'espace naturel, avantageusement par fusion sur support étendu pour laquelle on s'assure préalablement de l'inversibilité du problème du dépliage en choisissant des images préalablement registrées formant des N-uplets non dégénérés (rubrique FISE),
- un filtrage anti-repliement passe bas 50 du fond estimé, de type porte par exemple,
- une estimation 52 du décalage de la vignette de référence par un processus standard de recherche de solution optimale (maximum de corrélation ou minimum de résidus).

La suppression de fond anti-repliement 40 est la même que dans la version STAR-MR et implique une soustraction directe du fond estime ré-échantillonné de la vignette de référence extraite.
Les post-traitements sont les mêmes que dans la version STAR-MR.

(b) Version STAR-HRfdans l'espace 2D fréquentiel

Toujours dans le cas de vignettes carrées, les traitements images comprennent les étapes suivantes :

- un pré-traitement, consistant en une transformation de Fourier discrète (TDF) des vignettes. La registration anti-repliement qui comprend une estimation du fond par fusion de N1 images intégrant la vignette de référence, muni d'un filtrage anti-repliement passe bas à déphasage nul des images sur support étendu, de type porte par exemple, avec une fréquence de coupure adaptée à la coupure optique fc, et d'une estimation du décalage de la vignette de référence par recherche de solution optimale (maximum de corrélation, ou minimum de résidus).
- la suppression de fond anti-repliement et la même que dans la version STAR-MRf dans le domaine fréquentiel.

Les post-traitements sont également les mêmes que dans la version STAR-MR.
On décrira maintenant des exemples des processus ERMI (estimation rapide des mouvements inter-images) et FISE (fusion d'images sur support fréquentiel étendu) mentionnés plus haut.

ERMI

Le processus s'applique aux déphasages mesurés entre deux images et peut exploiter les amplitudes pour pondérer le poids de chaque fréquence.
Ce processus exploite la relation qui relie le mouvement inter-images et ses déphasages. Le déphasage à la fréquence (fx.fy) est donné par la formule $\Delta\phi = \Delta x * 2\pi * fx + 4y * 2\pi * fy$ où ($\Delta x$, $\Delta y$) représente le mouvement inter-images en x et y. L'estimation n'exige qu'un volume limité de calculs.
Dans une version non pondérée, les étapes sont les suivantes :
Intégration sur chaque axe :

$$\Delta\Phi x(fx) = \frac{1}{2^{Nv}}\cdot\sum_{fy}\Delta\Phi(fx,fy) \, , \, \Delta\Phi y(fy) = \frac{1}{2^{Nv}}\cdot\sum_{fx}\Delta\Phi(fx,fy)$$

où $\Delta\Phi(fx,fy)$ représente le déphasage entre les images à la fréquence (fx, fy).
Appariement des informations pour chaque fréquence f=fx=fy

$$\begin{bmatrix} \Delta\Phi x(f) \\ \Delta\Phi y(f) \end{bmatrix}$$

Estimation directe du mouvement inter-images correspondant à chaque fréquence f=fx=fy et répondant au critère des moindres carrés

$$\begin{bmatrix} \Delta x(f) \\ \Delta y(f) \end{bmatrix} = \begin{bmatrix} \dfrac{1}{2\pi f} & 0 \\ 0 & \dfrac{1}{2\pi f} \end{bmatrix} \begin{bmatrix} \Delta\Phi x(f) \\ \Delta\Phi y(f) \end{bmatrix}$$

Moyennage des mouvements inter-images

$$\Delta x = \frac{1}{2^{Nv}} \cdot \sum_{fx} \Delta x(fx) \quad \text{et} \quad \Delta y = \frac{1}{2^{Nv}} \cdot \sum_{yx} \Delta y(fy)$$

où Nv est la dimension de l'image

**Dans une version pondérée :**

- **Intégration pondérée, sur chaque axe, du déphasage, des amplitudes et des coefficients** :

$$Ax(fx) = \sum_{fy} A(fx,fy), \quad Ay(fy) = \sum_{fx} A(fx,fy) \quad \text{et}$$

$$\Delta\Phi x(fx) = \frac{\sum_{fy} A(fx,fy).\Delta\Phi(fx,fy)}{Ax(fx)}, \quad \Delta\Phi y(fx) = \frac{\sum_{fx} A(fx,fy).\Delta\Phi(fx,fy)}{Ay(fy)}$$

et

$$Cy(fx) = \frac{\sum_{fy} A(fx,fy).(2\pi * fy)}{Ax(fx)}, \quad Cx(fy) = \frac{\sum_{fx} A(fx,fy).(2\pi * fx)}{Ax(fx)}$$

où $\Delta\Phi(fx,fy)$ représente le déphasage entre les images à la fréquence (fx,fy) et A(fx,fy) représente l'amplitude de l'image à registrer qui servira à la pondération.
- **Appariement des informations pour chaque fréquence f=fx=fy**

$$\begin{bmatrix} \Delta\Phi x(f) \\ \Delta\Phi y(f) \end{bmatrix} \text{ et } \begin{bmatrix} Ax(f) \\ Ay(f) \end{bmatrix}, \begin{bmatrix} Cx(f) \\ Cy(f) \end{bmatrix} \text{ et } D(f) = (2\pi f)^2 - Cx(f)Cy(f)$$

- **Estimation directe du mouvement inter-images correspondant à chaque fréquence f=fx=fy** et répondant au critère des moindres carrés pondérés

$$\begin{bmatrix} \Delta x(f) \\ \Delta y(f) \end{bmatrix} = \frac{2^{N_{V}-1}}{Ax(f).Ay(f).D(f)} \begin{bmatrix} Ay(f).2\pi f & -Ay(f)Cy(f) \\ -Ax(f)Cx(f) & Ax(f).2\pi f \end{bmatrix} \begin{bmatrix} \Delta\Phi x(f) \\ \Delta\Phi y(f) \end{bmatrix}$$

$$\frac{1}{\sigma_{\Delta x}} = \frac{Ax(f).D(f)}{2^{N_{V}-1}.\sqrt{(2\pi f)^2 + (Cy(f))^2}} \quad \text{et} \quad \frac{1}{\sigma_{\Delta y}} = \frac{Ay(f).D(f)}{2^{N_{V}-1}.\sqrt{(2\pi f)^2 + (Cx(f))^2}}$$

- **Moyennage pondéré des mouvements inter-images**

$$\text{Avec pondération} \quad \Delta x = \frac{\sum_{fx}\left(\frac{1}{\sigma_{\Delta x}}\right)\Delta x(fx)}{\sum_{fx}\left(\frac{1}{\sigma_{\Delta x}}\right)} \quad \text{et} \quad \Delta y = \frac{\sum_{fy}\left(\frac{1}{\sigma_{\Delta y}}\right)\Delta y(fy)}{\sum_{fy}\left(\frac{1}{\sigma_{\Delta y}}\right)}$$

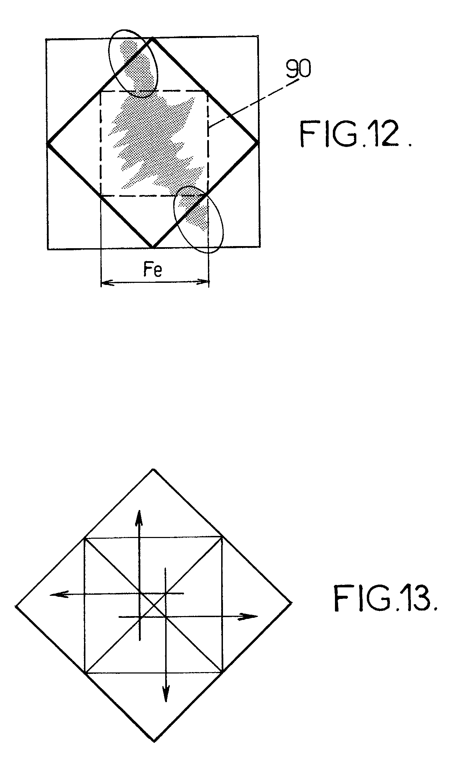

Un synoptique simplifié du processus ERMI est donné en figure 11.

**FISE (fusion d'images sur support fréquentiel étendu)**

Le processus de fusion d'images dans les traitements STAR-MR et STAR-HR est une fusion d'images sur support fréquentiel étendu qui résout de façon précise le problème du repliement à condition que le problème soit inversible et que la solution soit stable.. Cette fusion d'images sur support fréquentiel étendu consiste à déplier sur un nouveau support fréquentiel les images obtenues. Elle met à profit les décalages inter-images qui rendent observables les fréquences initialement repliées.

Tel quel ce processus est sensible à la dégénérescence du problème rendant le problème non inversible ou rendant la solution instable. On le rend robuste en assurant une redondance entre le nombre d'images utilisées lors de la fusion et l'extension de la surface du support fréquentiel sur lequel on déplie les images obtenues. On fusionne M images sur un support dont la surface est N fois celle d'une image, avec M>N.

Ce processus peut être implémenté en utilisant l'hypothèse de discrétisation des fréquences repliées, c'est à dire la fusion d'images sur support fréquentiel étendu discret., dont l'expression dans l'espace fréquentiel est simple. C'est ce cas qui sera décrit. Toutefois on peut également partir de l'hypothèse que les fréquences repliées occupent une bande continue mais l'expression est alors beaucoup plus complexe.

On décrira dans un premier temps le principe de la fusion de deux images seulement ( N = 2) sur un support étendu discret dans l'espace fréquentiel .

La fusion se fait en deux partie :

☐   Choix d'un support qui détermine les dépliements de spectre (Vdep$_1$)
☐   Inversion de la matrice de pliage

**a. choix du support**

La fenêtre d'échantillonnage des images de départ est représentée sur la figure 12 par le petit carré 90 de côté Fe, dessiné en tirets.. On souhaite accroître la surface de cette fenêtre d'un facteur 2, car on a deux images. La façon naturelle est de choisir un nouveau support carré de côté $\sqrt{2}\,Fe$ et incliné par rapport à la fenêtre d'échantillonnage d'origine d'un angle à 45°. Ce support est dessiné en traits épais sur le graphe de l'image de référence donné en figure 12. Visuellement, le repliement de spectre dû au sous-échantillonnage se traduit par le repliement des 'bras' inclus dans les deux ellipses.

Les vecteurs de repliement $Vdep(\vec{u})$ pour $\vec{u}$ appartenant à la fenêtre d'origine qui découlent de ce choix de support peuvent être représentés par les flèches sur la figure 13.

**b. expression de la fusion directe par inversion de la matrice de dépliage**

En tout point u de la fenêtre carrée d'origine la matrice de pliage du support étendu discret est définie par :

$$H(\vec{u}) = \begin{pmatrix} 1 & 1 \\ \exp(2\pi.j.\vec{\alpha}.\vec{u}) & \exp(2\pi.j.\vec{\alpha}.(\vec{u}+\vec{V}dep_1(\vec{u}))) \end{pmatrix}$$

Résoudre le problème de la fusion revient donc simplement à inverser H en la matrice de dépliage :

$$((D))(\vec{u}) = ((H))^{-1}(\vec{u}) = \frac{1}{\Delta}\begin{pmatrix} \exp(2\pi.j.\vec{\alpha}.(\vec{u}+\vec{V}dep_1(\vec{u}))) & -1 \\ -\exp(2\pi.j.\vec{\alpha}.(\vec{u})) & 1 \end{pmatrix}$$

$$\Delta = \exp(2\pi.j.\vec{\alpha}.\vec{u}).[\exp(2\pi.j.\vec{\alpha}.\vec{V}dep_1(\vec{u}))-1]$$

Cette inversion n'est possible qu'à condition que $\vec{\alpha}$ ait des coordonnées strictement comprises entre 0 et 1.
Le cas de la fusion de N images sur un support discret étendu N fois est assurée par l'inversion du problème linéaire du pliage
En tout point $\vec{u}$ de la fenêtre carrée d'origine, la matrice de pliage est définie ainsi :

$$H_{kl}=\exp[2\pi.j.\vec{\alpha}_k.(\vec{u}+Vdep_l(\vec{u}))]$$

et la solution du problème matriciel s'écrit ainsi :

$$\left(F(\vec{u}+\vec{V}dep_l(\vec{u}))\right)=((H))^{-1}.\left(S_k(\vec{u})\right)$$

L'inversibilité du problème peut être vérifiée en calculant le déterminant de la matrice H à inverser.
La fusion de M (M>N) images sur un support discret étendu N fois se déduit du précédent. Il s'agit de l'inversion du problème linéaire du pliage par l'opération $(H^t.H)^{-1}.H^t$ adaptée à l'inversion des matrices rectangulaires. En tout point u de la fenêtre carrée d'origine la matrice de pliage est définie par :Cette approche correspond à la solution du type « moindres carrés » au système de N équations à M inconnues.
L'inversibilité du problème peut encore être vérifiée en calculant le déterminant de la matrice H à inverser.
On ne décrira pas en détail la fusion sur support étendu continu. Elle peut être considérée comme une limite asymptotique de la fusion sur support discret lorsque l'échantillonnage tend vers 0 alors que le support est étendu N fois.
Les traitements STAR qui permettent d'obtenir l'essentiel des performances avec une puissance de calcul minimale dépendent notamment du rapport entre la fréquence d'échantillonnage fe et la fréquence de coupure optique fc. En général la sélection suivante donne des résultats particulièrement satisfaisants :

| Fe/fc | Type de traitement | Registration « anti-repliement » | Suppression Fond « anti-repliement » |
|---|---|---|---|
| $2 > fe/fc > \sqrt{2}$ | STAR-BR | Interpolation + « ERMI » | Soustraction Directe |
| $2 > fe/fc > \sqrt{2}$ | STAR-MR | Directe +« ERMI » | « FISEC 2/3 » + Soustraction |
| fe/fc > 1 | STAR-MR | Directe + « ERMI » | « FISEC 4/6 » + Soustraction |
| fe/fc > 1 | STAR-HR | «FISEC 2/3 » | « FISEC 4/6 » + Soustraction |
| $fe/fc > 2/\sqrt{5}$ | STAR-HR | « FISEC 2/3 » | « FISEC 6/9 » + Soustraction |

(suite)

| Fe/fc | Type de traitement | Registration « anti-repliement » | Suppression Fond « anti-repliement » |
|---|---|---|---|
| fe/fc > $1/\sqrt{2}$ | STAR-HR | « FISEC 4/6 » | « FISEC 8/12 » + Soustraction |
| ... | | ... | ... |

**Revendications**

1. Procédé de traitement spatio-temporel d'images successives d'une scène comportant un fond structuré, suivant lequel, éventuellement après une extraction dans les images de vignettes de dimensions inférieures à celles de l'image, recalées pour être cadrées de façon sensiblement identique sur une zone d'intérêt prédéterminé,

   - on mémorise de façon glissante des séquences comprenant chacune une image ou vignette de référence d'ordre i et un même nombre (N) d'images ou de vignettes encadrant temporellement l'image ou vignette de référence,
   - on effectue sur chaque séquence un traitement de registration anti-repliement de restitution des décalages inter-images, par estimation de fond, filtrage anti-repliement et estimation du décalage de l'image ou vignette de référence, et
   - on effectue, sur les images ou vignettes registrées, une opération de suppression de fond anti-repliement par nouvelle estimation du fond et soustraction, de façon à fournir une succession d'images ou vignettes filtrées.

2. Procédé de traitement suivant la revendication 1, **caractérisé en ce que** le traitement comporte un vignettage (18) permettant d'extraire les vignettes , choisies pour contenir la représentation d'une zone d'intérêt (17) dans les images.

3. Procédé de traitement suivant la revendication 2 , **caractérisé en ce que** le vignettage comprend:

   - la détermination de paramètres permettant de recaler les vignettes avec la zone d'intérêt dans la scène à partir d' informations externes sur un point d'origine de la vignette à extraire dans la scène, la position et l'attitude de l'instrument de prise d'images , afin d'obtenir l'adresse d'un pixel d'origine de la vignette dans l'image en cours; et
   - l'extraction d'une vignette utile rectangulaire (29) et d'une bordure (30) permettant de réduire les effets de bord.

4. Procédé de traitement suivant la revendication 1, 2 ou 3 , **caractérisé en ce que** le traitement implique un passage dans le domaine fréquentiel.

5. Procédé de traitement suivant l'une quelconque des revendications précédentes , **caractérisé en ce que** la registration anti-repliement (40) comporte:

   - une étape (46) de sélection des images utilisées lors de l'estimation du fond,
   - une étape (48) d'estimation du fond par fusion d'image(s) par interpolation d'une image ou plusieurs fusions de N1 images sur un support fréquentiel étendu,
   - une étape (50) de filtrage anti-repliement et
   - une étape (52) d'estimation du décalage de la vignette de référence.

6. Procédé de traitement suivant la revendication 5, **caractérisé en ce que** l'étape (52) d'estimation du décalage de la vignette de référence est effectuée par calcul du barycentre d'un maximum de corrélation, dans l'espace naturel

7. Procédé de traitement suivant la revendication 5, **caractérisé en ce que** l'étape (52) d'estimation du décalage de la vignette de référence est effectuée par recherche d'un optimum, en passant par une estimation dans l'espace fréquentiel,.

8. Procédé de traitement suivant la revendications 7 , **caractérisé en ce que** l'étape (48) d'estimation du fond par fusion d'image(s) s'effectue par interpolation d'une image (N1=1) ou fusions de N1 images sur un support fréquentiel étendu.

9. Procédé de traitement suivant la revendication 5, **caractérisé en ce que** l' étape (52) d'estimation du décalage de la vignette de référence est effectuée par estimation puis soustraction, dans chaque vignette de référence d'ordre i du fond estimé dans un domaine spectral étendu et recalé à partir d'informations issues de la registration anti-repliement.

10. Procédé de traitement suivant l'une quelconque des revendications précédentes , **caractérisé en ce que** la suppression de fond anti-repliement (40) comprend:

   - une sélection (54) parmi les vignettes prétraitées utilisant la sortie de la registration 36 et
   - une soustraction de fond.

11. Procédé de traitement suivant la revendication 1, à haute résolution dans l'espace naturel, **caractérisé en ce que** la registration anti-repliement comprend:

   - une estimation du fond (48) par fusion de N1 images (N1 étant supérieur à 1), dans l'espace naturel,
   - un filtrage anti-repliement passe bas (50) du fond estimé, de type porte par exemple,
   - une estimation (52) du décalage de la vignette de référence par un processus de recherche de solution optimale, tel que maximum de corrélation ou minimum de résidus.

12. Procédé de traitement suivant la revendication 11, **caractérisé en ce que** la fusion s'effectue sur support étendu et **en ce que**, préalablement à la fusion, on s'assure de l'inversibilité du problème du dépliage en choisissant des images préalablement registrées formant des N-uplets non dégénérés.

FIG.1.

FIG.2.

DE 16 → EXTRACTION → 32 → 30 29

26

12

24 RECALAGE → PIXEL D'ORIGINE

POINT D'ORIGINE

FIG.4.

TEMPS

Ns IMAGES   Ni   Ns IMAGES

VIGN. DE REF.

36 38   20   40

RAM

DE 18   34   35   RAM

RAM

FIG.3.

42

FIG.5.

FIG.7.

## FIG.6.

VIGN. DE RÉFÉR.

48 — ESTIM. FOND → [≈] 50

36

SÉLECTION IMAGE PRÉCÉD. 46

ESTIMAT. DÉCALAGE 52

DE 34

DÉCAL. POSSIBLES

ESTIMÉ

56 58

62

SÉLECTION → SOUSTRACTION FOND

40 54

---

$A(f_x, f_y)$ → INTÉGRATION PAR AXE ⇒ APPARIEMENT FRÉQUENTIEL

$\Delta\Phi(f_x, f_y)$

$\Delta\Phi_x(f)$ ET $\Delta\Phi_y(f)$
$A_x(f)$ ET $A_y(f)$
$C_x(f)$ ET $C_y(f)$

$[\Delta\Phi_x(f), \Delta\Phi_y(f)]$
ET $[A_x(f), A_y(f), C_x(f), C_y(f), D(f)]$

FIG.11.

ESTIMATION DES DÉCAL. ⇒ MOYENNAGE DES DÉCAL. ⇒ $[\Delta x, \Delta y]$
ET COVARIANCE ASSOCIÉE

$[\Delta x(f), \Delta y(f)]$
ET $[1/\sigma\Delta x(f)$ ET $1/\sigma\Delta y(f)]$

FIG.8.

VIGN. DE RÉFÉR.

ELIMINATION BORDURE

EP 1 318 476 A1

FIG.9.

DÉCALAGES
POSSIBLES

36 — [ ] → [ N₂ iM. ] → [ ] → 40 68 → POST TRAITEMENTS → 42

[ ] → RAM
34

[ — ]

RAM

[ ] ViGN. DE RÉFÉR.

48 — ESTiM. FOND → [ ≃ ] — 50

DE 34 [ ]

SÉLECTiON iMAGE PRÉCÉD.    ESTiMAT. DÉCALAGE — 52

46

DÉCAL. POSSiBLES

DÉCAL. ESTiMÉS

36

40

56    58    60

SÉLECTiON N₂ iMAGES — 54    FOND ESTiMÉ

FIG.10.    62 — [ ] → [ ]

17

FIG.12.

FIG.13.

**Office européen
des brevets**

**RAPPORT DE RECHERCHE EUROPEENNE**

Numéro de la demande

EP 02 29 2852

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | KIM S P ET AL: "SUBPIXEL ACCURACY IMAGE REGISTRATION BY SPECTRUM CANCELLATION" IMAGE AND MULTIDIMENSIONAL SIGNAL PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. 5, 27 avril 1993 (1993-04-27), pages V-153-V-156, XP000437640 ISBN: 0-7803-0946-4 * page V-153, alinéa 1 * | 1 | G06T7/00 G06T5/50 |
| A | JINCH H ET AL: "FAST FEATURE MATCHING USING RANDOM FIELD MODELS FOR IMAGE REGISTRATION" INTERNATIONAL JOURNAL OF ELECTRONICS, TAYLOR AND FRANCIS.LTD. LONDON, GB, vol. 76, no. 3, 1 mars 1994 (1994-03-01), pages 385-401, XP000443328 ISSN: 0020-7217 * figure 1 * | 1-3 | |
| A | HARDIE R C ET AL: "JOINT MAP REGISTRATION AND HIGH-RESOLUTION IMAGE ESTIMATION USING A SEQUENCE OF UNDERSAMPLED IMAGES" IEEE TRANSACTIONS ON IMAGE PROCESSING, IEEE INC. NEW YORK, US, vol. 6, no. 12, 1 décembre 1997 (1997-12-01), pages 1621-1632, XP000724630 ISSN: 1057-7149 * page 1621, colonne de gauche, ligne 1 - page 20 * | 1 | |

**DOMAINES TECHNIQUES RECHERCHES (Int.Cl.7)**

G06T

-/--

Le présent rapport a été établi pour toutes les revendications

| Lieu de la recherche | Date d'achèvement de la recherche | Examinateur |
|---|---|---|
| LA HAYE | 31 mars 2003 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

# EP 1 318 476 A1

**Office européen des brevets**

## RAPPORT DE RECHERCHE EUROPEENNE

Numéro de la demande

EP 02 29 2852

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | SCHAUM A: "OPTIMAL CHANGE DETECTION IN MISREGISTERED IMAGE SEQUENCES," PROCEEDINGS OF THE SPIE, SPIE, BELLINGHAM, VA, US, vol. 2103, 13 octobre 1993 (1993-10-13), pages 20-29, XP000562408 * page 20, alinéa 1 * * page 24, alinéa 4 - page 25, alinéa 5 * ----- | 1 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 31 mars 2003 | Chateau, J-P |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................
& : membre de la même famille, document correspondant

EPO FORM 1503 03.82 (P04C02)